(19) **Europäisches Patentamt**

**European Patent Office**

**Office européen des brevets**

(11) Veröffentlichungsnummer: **0 100 835**
**B1**

# (12) EUROPÄISCHE PATENTSCHRIFT

(45) Veröffentlichungstag der Patentschrift:
**20.04.88**

(21) Anmeldenummer: **83105745.0**

(22) Anmeldetag: **11.06.83**

(51) Int. Cl.⁴: **C 04 B 37/00,** B 23 K 35/30

(54) **Lot zum Verbinden von Siliziumcarbidwerkstoffen.**

(30) Priorität: **14.08.82 DE 3230320**

(43) Veröffentlichungstag der Anmeldung:
**22.02.84 Patentblatt 84/8**

(45) Bekanntmachung des Hinweises auf die Patenterteilung:
**20.04.88 Patentblatt 88/16**

(84) Benannte Vertragsstaaten:
**BE CH FR GB LI NL SE**

(56) Entgegenhaltungen:
**DE - C - 665 006**
**US - A - 3 813 759**

(73) Patentinhaber: **DORNIER SYSTEM GmbH,**
**Postfach 1360, D-7990 Friedrichshafen (DE)**

(72) Erfinder: **Röttenbacher, Reinhard, Dr.-Ing.,**
**Flurstrasse 8a, D-7777 Salem 3 (DE)**

(74) Vertreter: **Landsmann, Ralf, Dipl.-Ing., Kieeweg 3,**
**D-7990 Friedrichshafen 1 (DE)**

ACTORUM AG

## Beschreibung

Die Erfindung betrifft ein Lot, seine Verwendung und Verfahren zum Löten von Bauteilen aus siliziuminfiltriertem Siliziumcarbid, reaktionsgebundenem Siliziumcarbid oder gesintertem Siliziumcarbid. Infiltriertes bzw. reaktionsgebundenes Siliziumcarbid ist ein keramischer Verbundwerkstoff aus Siliziumcarbid (SiC) und metallischem Silizium (Si). Der Anteil an metallischem Silizium beträgt bis zu 30 Volumenprozent.

Die Anforderung an die Verbindungsstelle sind mechanische Festigkeit, weitgehende Porenfreiheit, Gasdichtigkeit und Korrosionsbeständigkeit, insbesondere Oxidationsbeständigkeit. Diese Anforderungen müssen auch bei Temperaturen oberhalb 1200 °C erfüllt sein.

Da Keramik ein sprödes Material ist, das auch bei hohen Temperaturen praktisch keine plastische Verformbarkeit besitzt, muss der thermische Ausdehnungskoeffizient des Verbindungsmaterials sorgfältig an den der zu verbindenden Keramik angepasst werden.

Bekannt ist ein Verfahren zur Herstellung von SiC-Keramikverbindungen durch Diffusionsschweissen (DE-A-3 003 186). Nachteilig bei diesem Verfahren sind die Kosten, die durch die erforderliche hohe Oberflächengüte der zu verbindenden Flächen und insbesondere durch die verhältnismässig langen Diffusionsschweisszeiten bedingt sind. Ein weiterer Nachteil ist der hohe Anpressdruck, der beim Diffusionsschweissen aufgebracht werden muss. Kompliziert geformte Bauteile können deshalb nicht oder nur unter grossem apparativen Aufwand verbunden werden.

Bekannt ist das Hochtemperaturlöten von reaktionsgebundenem und mit Silizium infiltriertem Siliziumcarbid (GB-A-1 315 319). Dabei wird Silizium mit Zusätzen von Germanium, Titan, Chrom, Eisen oder Nickel zur Schmelzpunktserniedrigung verwendet. Diese Lote reagieren im wesentlichen nur mit dem freien Silizium in SiSiC (Si-Gehalt max. 30%) und die Festigkeit der Verbindung ist kleiner als 10% der Festigkeit des Grundmaterials. Zudem sind teilweise lange Lötzeiten (bis 16 h) erforderlich, um diese Festigkeit zu erreichen.

Aus der DE-C-665 006 ist ein Lot bekannt, das aus 38% Kobalt und 62% Silizium besteht. Dieses Lot ist ausschliesslich zum Verbinden von Metallteilen vorgesehen.

Aus der US-A-3 813 759 ist es bekannt, Siliziumcarbidwerkstoffe mit einem Lot zu verbinden, das 45% Eisen und 55% Silizium enthält. Statt des Eisens sind auch andere Metalle als Bestandteile vorgeschlagen, nicht jedoch Kobalt.

Der Erfindung liegt die Aufgabe zugrunde, ein kostengünstiges, möglichst einfach anwendbares Verfahren zur Verbindung von Teilen aus Siliziumcarbidwerkstoffen und ein geeignetes Verbindungsmittel zu schaffen. Die Verbindungen müssen ausreichende Festigkeiten bis zu Temperaturen oberhalb 1200 °C besitzen, gasdicht, temperaturwechselbeständig und korrosions-, insbesondere oxidationsbeständig sein.

Die Aufgabe wird erfindungsgemäss gelöst durch Verwendung eines Lots zum Hochtemperatur-Reaktionslöten, welches im wesentlichen aus 20–45% Kobalt und 80–55% Silizium besteht. Die Verwendung eines weiteren Lots, ein Lot und Verfahren zum Löten sind Gegenstände der Ansprüche 2–11.

Im System Kobalt/Silizium tritt eine Schmelzpunkterniedrigung auf, die es ermöglicht, bei Temperaturen unterhalb des Schmelzpunktes der Siliziumkomponente im SiSiC-Werkstoff zu arbeiten. Beim Löten reagieren Silizium und Kobalt miteinander zu einer niedrigschmelzenden Legierung. Die Schmelze reagiert mit dem Silizium aus dem Grundwerkstoff, wobei eine siliziumreichere, höherschmelzende Legierung entsteht. Zusätzlich reagiert das Kobalt mit dem Siliziumcarbind. Es greift dessen Oberfläche an und sorgt für eine gute Verzahnung zwischen Lot und Grundwerkstoff, so dass ein Reaktionslöten stattfindet, das gute Verbundfestigkeiten erwarten lässt.

Dem Kobalt-Siliziumlot können Zusätze von Aktivmetallen wie z.B. Titan, Chrom oder Zirkonium beigefügt werden, wodurch die Schmelztemperatur weiter erniedrigt werden kann und die Reaktion zwischen Lot und Grundmaterial verstärkt werden kann. Ebenfalls möglich ist die Zugabe von Kohlenstoff zum Kobalt-Siliziumlot. Während des Lötens reagiert das Lot mit allen Komponenten des Grundwerkstoffes (Si und SiC) und ein Teil des Siliziums reagiert mit dem Kohlenstoff zu sehr fein verteiltem neuem Siliziumcarbid, wodurch in der Verbindungsstelle der gleiche Bindungstyp wie im Grundmaterial entsteht. Da Kobalt keine stabilen Carbide bildet, entsteht kein artfremdes Carbid, das die Eigenschaften der Verbindung verschlechtern würde.

Die Oberflächen der zu verbindenden Teile werden mit einer Schicht des Lotpulvers belegt, aufeinandergelegt und unter leichten Druck gebracht. Durch Anwendung hoher Temperatur (max. 1400 °C) über kurze Zeit (max. 30 min) werden die Werkstücke gelötet.

Die Verwendung eines kobalthaltigen Lotes ist für den Fachmann nicht naheliegend, da er erwarten muss, dass Kobalt mit dem Silizium eine intermetallische $CoSi_2$-Phase bildet, die die Eigenschaften des Verbundes verschlechtert. Überraschend wurde jedoch gefunden, dass durch die erfindungsgemässe Anwendung eines leichten Druckes gerade das Kobalt weitgehend aus der Verbindungsstelle herausgedrückt wird. In der Verbindungsstelle verbleibt nur sehr wenig Kobalt.

Silizium oxidiert an Luft unter Bildung einer geschlossenen $SiO_2$-Schicht auf der Oberfläche. Die Bildung dieser Schicht während des Prozesses muss vermieden werden, da sie die Reaktion des Lots mit dem Grundwerkstoff verhindert oder zumindest erschwert. Deshalb wird das Verfahren bevorzugt unter Vakuum oder Schutzgas durchgeführt. Bei ausreichend kurzen Verfahrenszeiten kann auch an Luft verbunden werden.

Für das Aufbringen der Zwischenschicht sind erfindungsgemäss mehrere Möglichkeiten durchführbar:

- Das Pulver der oben beschriebenen Zusammensetzung wird in einem organischen Lösungsmittel und einer öligen Substanz aufgeschlämmt und die Suspension mit einem Farbspritzverfahren aufgebracht.
- Auf die zu verbindenden Teile werden die Metallverbindungen bzw. die Metallverbindungen gemischt mit Kohlenstoff aufgebracht.

Die Metallverbindungen werden thermisch unter Sauerstoffausschluss zersetzt, wodurch sehr fein verteilte Metalle entstehen.

- Die Metalle können aufgedampft werden.
- Die Metalle können aufgesputtert werden.
- Die Metallschichten können elektrolytisch abgeschieden werden.

Die Erzeugung der für die Verbindung notwendigen Wärme ist auf verschiedene Weisen möglich:

- Die Heizung der Verbindungsstelle erfolgt induktiv mit einer HF-Spule, deren Geometrie so gewählt wird, dass sich die Wärmeeinkopplung auf die Verbindungsstelle konzentriert. Unter Ausnutzung ihrer elektrischen Leitfähigkeit können die SiC-Bauteile als Suszeptor wirken, oder es wird ein Graphitsuszeptor verwendet.
- Die Heizung der Verbindungsstelle erfolgt durch einen widerstandsbeheizten Ofen.
- Die Heizung der Verbindungsstelle erfolgt über heisses Schutzgas.
- Die Heizung erfolgt direkt durch Widerstandsheizung. Über Manschetten wird die Spannung an die zu verbindenden Teile angelegt. Der Stromfluss und damit die Erwärmung findet nur an den Kontaktstellen der Verbindungsflächen statt.

Die Vorteile des erfindungsgemässen Verfahrens liegen

- in der einfachen und schnellen Durchführbarkeit;
- im geringen Aufwand bei der Vorbenutzung der Lötstelle
- und in den guten Eigenschaften der Verbindungsstelle.

Das erfindungsgemässe Lot liefert mechanisch stabile, heliumdichte Verbindungen. Die maximale Anwendungstemperatur des gefügten Bauteils ist die gleiche wie die des Grundmaterials und wird nicht durch die Verbindungsstelle begrenzt. Die Verbindungsstelle zeigt die gleiche gute Temperaturwechselbeständigkeit wie das Grundmaterial. Die Verbindungsstelle hat das gleiche Oxidationsverhalten wie das Grundmaterial.

Biegefestigkeitstests zeigen, dass zwei erfindungsgemäss verlötete SiSiC-Rohre nicht in der Verbindungsstelle, sondern daneben brechen.

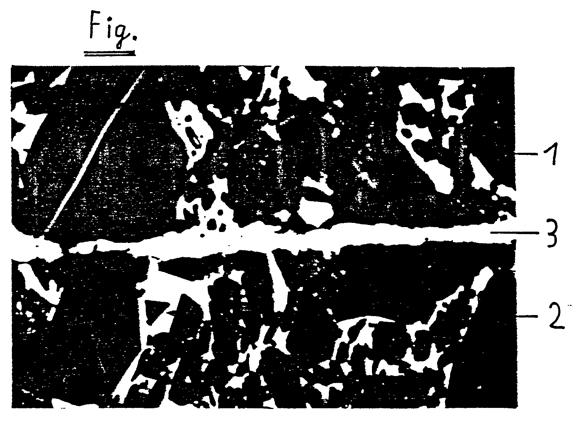

Weitere Vorteile und Merkmale ergeben sich aus der Figur, die nachfolgend beschrieben wird.

Die Fig. zeigt einen Verbund zweier SiSiC-Rohre.

Die Figur zeigt ein Schliffbild der Verbindungsstelle zwischen den beiden Rohren 1 und 2 in 1200-facher Vergrösserung. Die Lotschicht 3 hat eine Dicke von 5 bis 10 μm, ist weitgehend porenfrei und einphasig. Der Verbund wird über das Lot und das Silizium des Grundmaterials (hell) hergestellt. Die SiC-Körner (dunkel) sind an der Verbindungsstelle angegriffen und aufgerauht, wodurch die Haftung am Lot verbessert wird.

Ein Ausführungsbeispiel erläutert die Erfindung nachfolgend:

Die zu verbindenden Stirnflächen zweier Rohre (Aussendurchmesser 50 mm, Innendurchmesser 40 mm, Länge 500 mm) aus reaktionsgebundenem und mit Silizium infiltriertem Siliziumcarbid (SiSiC) werden plan geschnitten. Auf diese Flächen wird eine Aufschlämmung aus Kobaltpulver und Siliziumpulver (35:65 Gew.-%) aufgespritzt. Die Schichtdicke beträgt ca. 200 μm. Nach dem Trocknen werden die vorbereiteten Stirnflächen der Rohre aufeinandergelegt und mit leichtem axialem Druck beaufschlagt. Der Verbund wird unter Schutzgas in einem widerstandsbeheizten Ofen aufgeheizt. Die heisse Zone erstreckt sich dabei auf 10 bis 15 cm beidseitig der Verbindungsstelle. Die Temperatur beträgt 1380°C über eine Zeit von ca. 20 min.

Die Lotschicht ist nach dem Löten 5 bis 10 μm dick, überschüssiges Lot ist zum Rand hinausgedrängt. Der Rohrverbund ist mechanisch stabil und heliumdicht.

## Patentansprüche

1. Verwendung eines Lots, das im wesentlichen aus 20–45% Kobalt und 80–55% Silizium besteht, zum Hochtemperatur-Reaktionslöten von Teilen aus Siliziumcarbidwerkstoffen.

2. Verwendung eines Lotes, das ca. 35% Kobalt und 65% Silizium enthält, zum Hochtemperatur-Reaktionslöten von Teilen aus Siliziumcarbidwerkstoffen.

3. Lot auf Basis von Silizium und Kobalt, dadurch gekennzeichnet, dass das Lot zum Hochtemperatur-Reaktionslöten von Teilen aus Siliziumcarbidwerkstoffen besteht aus:

20–45% Kobalt

80–55% Silizium (bezogen auf den Gehalt an Kobalt und Silizium) und Beimengungen von

a) den Aktivmetallen Titan, Chrom oder Zirkonium zur Erniedrigung der Schmelztemperatur und zur Verstärkung der Reaktion zwischen Lot und Grundmaterial, und/oder von

b) Kohlenstoff zur Bildung von Siliziumcarbid.

4. Verfahren zum Löten, dadurch gekennzeichnet, dass ein Lot gemäss Anspruch 3 verwendet wird.

5. Verfahren nach einem der Ansprüche 1, 2 und 4, dadurch gekennzeichnet, dass die Lotschicht in Pulverform aufgespritzt wird.

6. Verfahren nach einem der Ansprüche 1, 2 und 4, dadurch gekennzeichnet, dass die Lotschicht durch thermische Zersetzung und/oder Reduktion von Metallverbindungen aufgebracht wird.

7. Verfahren nach einem der Ansprüche 1, 2 und 4, dadurch gekennzeichnet, dass die Lotschicht durch Sputtern aufgebracht wird.

8. Verfahren nach einem der Ansprüche 1, 2 und 4, dadurch gekennzeichnet, dass die Lotschicht durch Aufdampfen aufgebracht wird.

9. Verfahren nach einem der Ansprüche 1, 2 und 4, dadurch gekennzeichnet, dass die Lotschicht durch elektrolytische Abscheidung aufgebracht wird.

10. Verfahren nach einem der Ansprüche 1, 2 und 4, dadurch gekennzeichnet, dass die Bauteile beim Löten aufeinandergedrückt werden.

11. Verfahren nach einem der Ansprüche 1, 2 und 4, dadurch gekennzeichnet, dass die zur Verbindung notwendige Wärme durch Stromdurchgang durch die Verbindungsstelle erzeugt wird.

## Claims

1. Use of a solder, which consists basically of 20–45% cobalt and 80–55% silicon for the high-temperature reaction soldering of parts made of silicon carbide materials.

2. Use of a solder containing approximately 35% cobalt and 65% silicon for the high-temperature reaction soldering of parts made of silicon carbide materials.

3. Silicon and cobalt-based solder, characterised in that the solder for the high-temperature reaction soldering of parts made of silicon carbide materials consists of:
   20–45% cobalt
   80–55% silicon (related to the cobalt and silicon content) and admixtures of
   a) the active metals, titanium, chromium or zirconium for reducing the melting temperature and for increasing the reaction between solder and base material, and/or
   b) carbon for forming silicon carbide.

4. Method of soldering, characterised in that a solder according to claim 3 is used.

5. Method according to one of claims 1, 2 and 4, characterised in that the solder layer is sprayed on in powder form.

6. Method according to one of claims 1, 2 and 4, characterised in that the solder layer is applied by thermal decomposition and/or the reduction of metal compounds.

7. Method according to one of claims 1, 2 and 4, characterised in that the solder layer is applied by sputtering.

8. Method according to one of claims 1, 2 and 4, characterised in that the solder layer is applied by evaporation.

9. Method according to one of claims 1, 2 and 4, characterised in that the solder layer is applied by electrolytic deposition.

10. Method according to one of claims 1, 2 and 4, characterised in that the components are pressed on to each other during the soldering operation.

11. Method according to one of claims 1, 2 and 4, characterised in that the heat required for the joint is generated by the passage of a current through it.

## Revendications

1. Utilisation d'un métal d'apport composé essentiellement d'environ 20 à 45% de cobalt et de 80 à 55% de silicium pour le brasage par réaction à haute température de pièces réalisées à partir de matériaux de carbure de silicium.

2. Utilisation d'un métal d'apport contenant environ 35% de cobalt et 65% de silicium pour le brasage par réaction à haute température de pièces réalisées à partir de matériaux de carbure de silicium.

3. Métal d'apport à base de silicium et de cobalt, caractérisé en ce que le métal d'apport pour le brasage par réaction à haute température de pièces réalisées à partir de matériaux de carbure de silicium se compose de:
   20 à 45% de cobalt
   80 à 55% de silicium (rapporté à la teneur en cobalt et en silicium) et d'additifs
   a) de métaux actifs titane, chrome ou zirconium pour abaisser la température de fusion et pour renforcer la réaction entre le métal d'apport et le matériau de base et/ou
   b) de carbone pour la formation de carbure de silicium.

4. Procédé de brasage, caractérisé en ce qu'il met en œuvre un métal d'apport selon la revendication 3.

5. Procédé selon l'une quelconque des revendications 1, 2 et 4, caractérisé en ce que la couche de métal d'apport est appliquée sous forme de poudre par pulvérisation.

6. Procédé selon l'une quelconque des revendications 1, 2 et 4, caractérisé en ce que la couche de métal d'apport est appliquée par décomposition thermique et/ou réduction de composés métalliques.

7. Procédé selon l'une quelconque des revendications 1, 2 et 4, caractérisé en ce que la couche de métal d'apport est appliquée par crépitement.

8. Procédé selon l'une quelconque des revendications 1, 2 et 4, caractérisé en ce que la couche de métal d'apport est appliquée par métallisation sous vide.

9. Procédé selon l'une quelconque des revendications 1, 2 et 4, caractérisé en ce que la couche de métal d'apport est appliquée par dépôt électrolytique.

10. Procédé selon l'une quelconque des revendications 1, 2 et 4, caractérisé en ce que, lors du brasage, les pièces sont pressées l'une sur l'autre.

11. Procédé selon l'une quelconque des revendications 1, 2 et 4, caractérisé en ce que la chaleur nécessaire pour l'assemblage est produite par le passage du courant par la jointure.

Fig.